# EUROPEAN PATENT APPLICATION

(11) **EP 4 840 799 A1**
(43) Date of publication of application: **18.11.2026**
(21) Application number: 26178827.7
(22) Date of filing: 14.05.2026
(51) Int. Cl.: B65G 43/00, B65G 1/04

(54) **METHOD FOR MANAGING ACCESS TO A WAREHOUSE AND A WAREHOUSE**

(30) Priority: 15.05.2025 IT 202500010960
(71) Applicant: SCM Group S.p.A., 47921 Rimini (RN) (IT)
(72) Inventor: MANDOLESI, Stefano, 47921 Rimini (RN) (IT)
(74) Representative: Gallo, Gianluca

(57) **Abstract**

Describes is a method for managing access to a warehouse comprising a step of moving the goods (M) into a booking area (100) facing a loading and unloading zone (C) of the warehouse, and a step of determining a condition of presence of the goods (M) in the booking area (100) for a predetermined length of time. The method comprises a step of detecting the position of a movement device (D) movable within the warehouse and configured to move the goods (M) between a first and a second storage zone (Z1, Z2) of the warehouse. On the basis of the detection, the method comprises a step of determining at least one of the following conditions: entry granted condition, wherein the movement device (D) is in the first storage zone (Z1) and the goods (M) can advance to access the loading and unloading zone (C); entry denied condition, wherein the movement device (D) is in the second storage zone (Z2) and the goods (M) are inhibited from accessing the loading and unloading zone (C).

## Description

The present invention relates to a method for managing access to a warehouse and a warehouse.

Warehouses are generally known in which the goods are moved within the warehouse itself to be stocked and stored. In the prior art warehouses there are different storage zones and at least one loading and unloading zone where the inbound and outbound goods to or from the warehouse are positioned.

Usually, the movements of the goods are carried out by one or more movement devices that, moving at high speeds, pick up or release the goods in the loading and unloading zone and move them from one zone of the warehouse to another zone of the warehouse. In this situation, the access to the loading and unloading zone for the picking up or releasing of goods is particularly dangerous for an operator who could be struck by the movement device.

In order to safely pick up or release the goods in the loading and unloading zone, it is known, currently, that an operator positions the goods, for example by means of a forklift or the like, in a zone facing the loading and unloading zone, and proceeds to manually request, for example by using a special button, the authorisation to access the loading and unloading zone. In this situation, the operator is forced, whenever there is a need to load or unload the goods in the loading and unloading zone, to manually request the authorisation to enter the loading and unloading zone, wait for the authorisation to be issued and proceed with the loading or unloading of the goods. This sequence of operations is particularly lengthy and is operationally inconvenient.

Further, it is currently known that, in order to guarantee the safety of the operator, whenever access to the loading and unloading zone is required, the movement devices are stopped and prevented from moving within the warehouse. This causes continuous interruptions to the warehouse operations.

The technical purpose of the present invention is therefore to provide a method for managing access to a warehouse and a warehouse which are able to overcome the drawbacks of the prior art.

An aim of the present invention is therefore to provide a method for managing access to a warehouse that is convenient, effective and safe for an operator.

A further aim of the present invention is to provide a warehouse in which the picking up and releasing of goods is safe for an operator and is facilitated.

The technical purpose indicated and the aims specified are substantially achieved by a method for managing access to a warehouse and a warehouse comprising the technical features described in one or more of the appended claims. The dependent claims correspond to possible embodiments of the invention.

In particular, the specified technical purpose and the specified aims are substantially achieved by a method for managing access to a warehouse according to the invention.

The method comprises a step of moving goods into a booking area facing a loading and unloading zone of the warehouse.

In particular, the booking area is external to the loading and unloading zone. The term "goods" is used here in an extremely generic manner to indicate products (by way of example and not limited to beams, panels and the like), materials, operators, objects for transporting or supporting products (such as forklifts or pallets) and the like. In particular, reference to "goods" moved by a movement device of the warehouse means that these goods are products or materials which must be stored in or withdrawn from the warehouse, but not operators or transport/support means for the products. However, reference to "goods" placed or stored in areas or zones, means that these "goods" are also operators, means of transport/support for the products and the like.

The method further comprises a step of determining a condition of presence of the goods in the booking area for a predetermined length of time. In this case, for example, the term "goods" could refer to a means of transport driven by an operator and transporting materials or products to be released in the loading and unloading zone, or it could refer to a means of transport driven by an operator and ready to pick up materials or products coming out from the loading and unloading zone.

Thus, in use, if the goods remain in the booking area for a predetermined length of time, the condition of presence is determined.

Preferably, the detection of the goods in the booking area is carried out by means of one or more non-contact detection devices, for example radar devices.

Subsequently, the method comprises a step of detecting the position of a movement device movable within the warehouse and configured to move the goods between a first and a second storage zone of the warehouse.

The loading and unloading zone defines at least one sector of the second storage zone.

Preferably, the loading and unloading zone defines a sector of the second storage zone.

Alternatively, the loading and unloading zone defines the entire second storage zone.

In other words, when goods have been detected in the booking area for a predetermined length of time (and therefore the presence condition has been determined), the position of the movement device is detected.

On the basis of the above-mentioned detection, the method comprises a step of determining at least one of the following conditions:
entry granted condition, in which the movement device is in the first storage zone and the goods can advance to access the loading and unloading zone;
entry denied condition, in which the movement device is in the second storage zone and the goods are inhibited from gaining access to the loading and unloading zone.

In other words, if it is determined in the detection step that the movement device is in the first storage zone, the goods can be moved to the loading and unloading zone. If, on the contrary, it is determined during the detection step that the movement device is in the second storage zone, the access of goods to the loading and unloading zone is inhibited.

This prevents, if the movement device is in the second storage zone, that an operator and/or the products or materials transported by the operator can erroneously access the loading and unloading zone and can be accidentally struck.

Preferably, if the entry denied condition is obtained, the method comprises a step of generating an alert signal and a step of sending to the movement device a command signal identifying a movement action towards the first storage zone.

Preferably, the alert signal indicates that the advancing of goods towards the loading and unloading zone is inhibited.

For example, the alert signal may be an audible and/or visual signal.

In other words, if the entry denied condition is obtained, the movement device is moved towards the first storage zone while the alert signal is generated.

Preferably, if, on the other hand, the entry granted condition is obtained, the method comprises a step of generating an accessibility granted signal and a step of keeping the movement device in the first storage zone.

Preferably, the accessibility granted signal identifies a permission for the goods to advance towards the loading and unloading zone.

For example, the accessibility granted signal may be an audible and/or visual signal.

In other words, if the entry granted condition is obtained, the movement device is kept in the first storage zone, and possibly moved within the first storage zone, while the accessibility granted signal is generated so that the goods can access the loading and unloading zone.

Advantageously, keeping the movement device in movement in the first storage zone allows the movement device to continue the storage operations safely while the goods enter or leave the loading and unloading zone.

According to a possible embodiment, the method comprises a step of detecting a break in a beam emitted by a safety barrier located in proximity to an entrance to the loading and unloading zone. In this situation, if the entry denied condition is obtained and a break of the beam is detected, the method comprises a step of stopping the movement of the movement device and, preferably, a step of activating a danger signal, for example an acoustic and/or visual signal.

In doing so, if the entry denied condition was obtained, that is, if the movement device was located in the second storage zone, but the beam was broken, that is, someone or something was entering the loading and unloading zone, the movement device would be immediately stopped to prevent it from striking objects or people in the loading and unloading zone. According to one aspect of the invention, the method comprises a step of detecting a break in a beam emitted by the safety barrier and, if the entry granted condition is obtained, the method comprises a step of disabling the safety barrier. In this situation, when the entry granted condition is obtained, the safety barrier is deactivated and the goods can be placed in the loading and unloading zone.

In doing so, if the entry granted condition was obtained, that is, if the movement device was in the first storage zone, the beam would be deactivated so as to allow an access to the loading and unloading zone without stopping the movement device.

Preferably, after obtaining the entry granted condition, the method comprises a step of releasing or picking up the goods in the loading and unloading zone. For example, if the goods (understood as products or materials) are placed on a means of transport driven by an operator to be released in the loading and unloading zone, when the entry granted condition is obtained, the operator can move the means of transport into the loading and unloading zone to release the goods there. If, on the other hand, for example, something needs to be picked up from the loading and unloading zone, once the entry granted condition is obtained, the operator can move the means of transport into the loading and unloading zone to load whatever is positioned there.

After the step of releasing or picking up the goods, the method comprises a first step of checking whether there is a condition of absence of movement in the loading and unloading zone for a predetermined length of time.

In other words, in the first checking step, it is checked that, for a predetermined length of time, there is no movement in the loading and unloading zone. For example, if the operator has driven the means of transport out from the loading and unloading zone towards the booking area, leaving the goods in the loading and unloading zone, it will be detected that there is no movement in the loading and unloading zone for a predetermined length of time. Similarly, if the operator has driven the means of transport loaded with goods out from the loading and unloading zone towards the booking area, it will be detected that there is no movement in the loading and unloading zone for a predetermined length of time.

The method further comprises a second step of checking a condition of absence of movement in the booking area for a predetermined length of time.

In other words, in the second checking step, it is checked that, for a predetermined length of time, there is no movement in the booking area. For example, if the operator has driven the means of transport out from the booking area, it will be detected that there is no movement in the booking area for a predetermined length of time.

If both of the above-mentioned conditions are true, the method comprises a step of generating a signal representative of the clearing of the loading and unloading zone and of the booking area.

Preferably, the signal may be an acoustic and/or visual signal.

In doing so, having detected that there has been no movement in the loading and unloading zone or in the booking area for a predetermined length of time, it is possible to resume normal operations of the warehouse and, in particular, it is possible to start moving the movement device again also in the first storage zone.

Preferably, the method comprises, between the first and the second checking steps, a step of reactivating the safety barrier.

Preferably, the method further comprises, between the first and the second checking steps, a third step of checking an absence of the break of the safety barrier. In doing so, the method is able to check that, for example, the operator driving the means of transport is not in transit between the loading and unloading zone and the booking area.

After the step of generating a signal representative of the completion of the clearing, the method comprises a step of moving the movement device, which until then had been kept in the first storage zone, also into the second storage zone and into the loading and unloading zone. In this way, the movement device can resume its normal operation.

According to an embodiment of the method, prior to the step of moving the goods in the booking area, the method comprises a step of detecting the presence of the goods in the booking area and a step of reducing a speed of movement of the movement device during a transit of the movement device in the second storage zone.

In other words, when the presence of the goods in the booking area is detected, for example when the entry of a means of transport is detected (whether or not it is transporting materials or products) into the booking area, the speed of movement of the movement device during its transit in the second storage zone is reduced.

Preferably, in such a situation, the speed of movement of the movement device during a transit thereof in the second storage zone is reduced while the speed of movement of the movement device during a transit thereof in the first storage zone is kept unchanged.

Preferably, the step of reducing the speed of movement of the movement device is carried out when the presence of goods is detected in a detection area facing the booking area. In particular, the booking area is interposed between the detection area and the loading and unloading zone.

Preferably, the speed of movement of the movement device in the second storage zone is restored after the step of generating a signal representing that the clearing has taken place.

In other words, when, following the checks, the signal representative of the clearing of the booking area and of the loading and unloading zone is generated, the movement device can be moved to the second storage zone with its original operating speed.

The specified technical purpose and the specified aims are also achieved by a warehouse according to the present invention.

The warehouse comprises a movement device configured to pick up or release the goods in a loading and unloading zone of the warehouse and to move the goods within the warehouse.

The warehouse further comprises a first storage zone in which the movement device is movable and a second storage zone in which the movement device is movable.

The loading and unloading zone defines at least one sector of the second storage zone in which the inbound and outbound goods to or from the warehouse are positioned.

The warehouse further comprises a booking area facing the loading and unloading zone and external to the first and to the second storage zones. The booking area is configured to receive the inbound or outbound goods to or from the loading and unloading zone.

The warehouse further comprises at least one presence sensor, preferably a radar or in any case a non-contact sensor, positioned in the booking area and configured to determine a condition of presence of the goods in the booking area for a predetermined length of time.

In other words, the at least one presence sensor determines the condition of presence of the goods if they remain in the booking area for a predetermined length of time.

Preferably, the warehouse comprises a pair of presence sensors in the booking area.

The warehouse further comprises at least one position device operatively connected to the movement device and configured to determine a position of the movement device.

The warehouse further comprises a control unit configured to determine, on the basis of the determinations of the at least one presence sensor and of the position device, at least one of the following conditions:
entry granted condition, in which the movement device is in the first storage zone and the goods can access the loading and unloading zone;
entry denied condition, in which the movement device is in the second storage zone and the goods are inhibited from gaining access to the loading and unloading zone.

Preferably, the warehouse further comprises an indicator element configured to indicate to an operator the entry granted and denied condition. According to an embodiment, the indicator element is a visual element.

Preferably, the indicator element is an optical element.

More preferably, the indicator element comprises a first light which switches on if the entry granted condition is determined and a second light which switches on if the entry denied condition is determined.

According to an alternative embodiment, the indicator element is able to produce different sounds depending on whether the entry granted or denied condition is obtained.

Alternatively, the indicator element is able to both produce specific sounds and activate a specific light depending on whether the entry granted or denied condition is obtained.

Preferably, the indicator element is located in proximity to an entrance to the loading and unloading zone.

According to one embodiment, the warehouse comprises a safety barrier located in proximity to an entrance to the loading and unloading zone and configured to detect an entry of the goods into the loading and unloading zone.

Preferably, the safety barrier is configured to emit a beam.

The safety barrier is operatively connected to the control unit and configured to receive, from the control unit, a deactivation command if the entry granted condition is obtained. In this situation, the safety barrier is deactivated and the entrance of goods into the loading and unloading zone is allowed.

The safety barrier is further configured to send a danger signal to the control unit if it detects the entry of goods into the loading and unloading zone when the entry denied condition is determined. More specifically, if the safety barrier, and in particular the beam it emits, is broken, it means that something or someone is passing from the booking area to the loading and unloading zone despite the entry denied condition.

Preferably, following the sending of the danger signal, the control unit sends a stop signal to the movement device so that it stops its movement.

Preferably, following the sending of the danger signal, the control unit is further configured to signal the dangerous condition, for example by means of a visual and/or acoustic signal, to an operator.

According to one embodiment, the control unit is configured, on the basis of the detection of the at least one presence sensor, to reduce the speed of movement of the movement device during a transit of the movement device in the second storage zone.

In other words, as soon as the presence sensor detects the presence of the goods in the booking area, the control unit reduces the speed of movement of the movement device in the second storage zone.

According to other embodiments, the warehouse comprises a detection area facing the booking area so that the booking area is interposed between the detection area and the loading and unloading zone. In this situation, the warehouse comprises at least one presence detector, preferably a radar, configured to detect the presence of the goods in said detection area.

The at least one least one presence detector is connected to the control unit, which is configured, on the basis of the detection, to reduce a speed of movement of the movement device during a transit of the movement device in the second storage zone.

Preferably, the warehouse further comprises, in the loading and unloading zone and/or in the booking area, at least one movement sensor configured to detect a movement and to send to the control unit, after a predetermined length of time, a signal of absence of movement in the loading and unloading zone and/or in the booking area.

The presence of the movement sensor is useful in order to ensure, once the goods are positioned or picked up in the loading and unloading zone, that the loading and unloading zone and/or the booking area are clear of operators and/or means for transport/support of the goods.

Preferably, the movement sensor coincides with the presence detector and/or with the presence sensor.

Alternatively, the movement sensor is distinct from the presence detector and/or from the presence sensor.

According to one embodiment, the warehouse further comprises a signalling element connected to the control unit and positioned at an entrance of the loading and unloading zone and configured to emit one or more of:
- an accessibility granted signal permitting access to the booking area and/or to the loading and unloading zone;
- an accessibility denied signal inhibiting access to the booking area and/or to the loading and unloading zone;
- a signal of presence of the goods at least in the detection area.

Preferably, the above-mentioned signals are visual and/or acoustic signals. Further features and advantages of the invention are more apparent in the non-limiting description which follows of a non-exclusive embodiment of a method for managing access to a warehouse and of a warehouse.

The description is set out below with reference to the accompanying drawings which are provided solely for purposes of illustration without restricting the scope of the invention and in which:

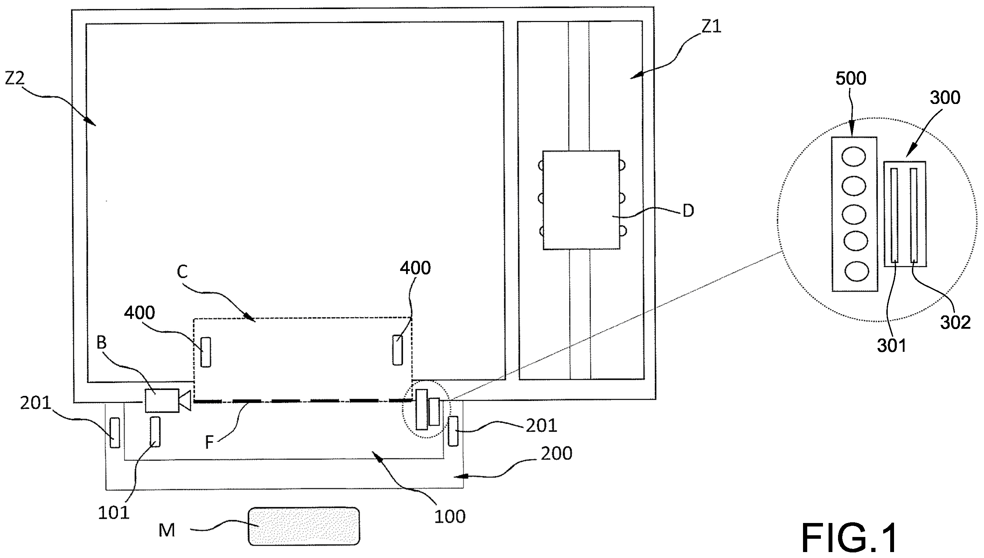

- Figures 1-4 show different steps of the method.

The accompanying drawings represent various steps of the method according to the present invention.

The method comprises a step of moving the goods "M" in a booking area 100 facing a loading and unloading zone "C" of the warehouse.

The step of moving the goods "M" can be understood to mean that, for example, an operator driving a means of transport transporting materials or products to be stored enters the loading or unloading zone "C" to release such materials or products or it can be understood to mean that, for example, an operator driving a means of transport enters the loading or unloading zone "C" to pick up materials or products.

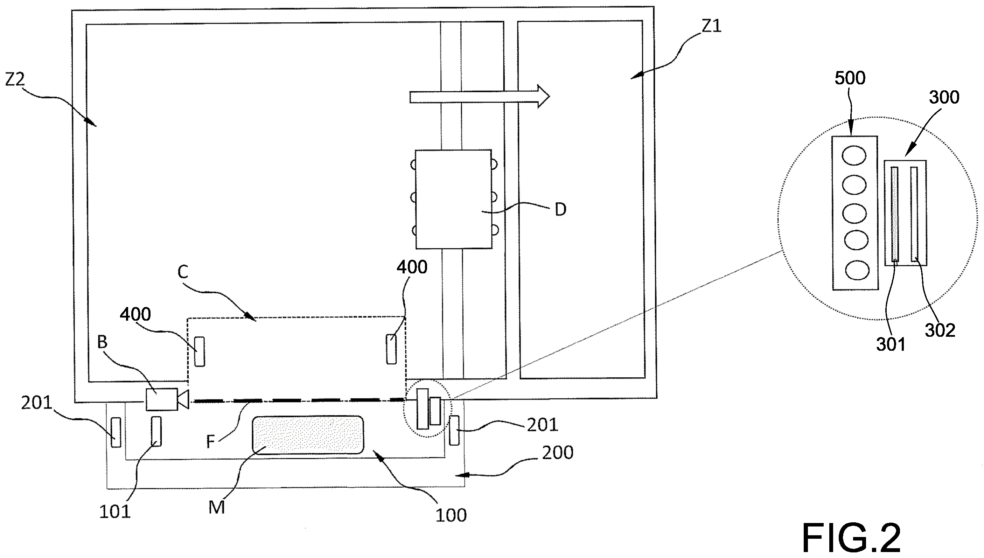

The method further comprises a step of determining a condition of presence of the goods "M" in the booking area 100 for a predetermined length of time (Figure 2).

In other words, during the step of determining the condition of presence, checks are made to ensure that the goods "M" are in the booking area 100 for a predetermined length of time.

The method further comprises a step of detecting the position of a movement device "D" movable within the warehouse and configured for moving the goods "M" between a first and a second storage zone "Z1", "Z2" of the warehouse.

The loading and unloading zone "C" defines at least one sector of the second storage zone "Z2".

In the embodiment illustrated in the accompanying drawings, the first and second storage zones "Z1", "Z2" are adjacent to each other, and the loading and unloading zone "C" defines a sector of the second storage zone "Z2". In this situation, the movement device "D" is movable so that it can move between the first storage zone "Z1", the second storage zone "Z2" and the loading and unloading zone "C".

In use, therefore, once the condition of presence of the goods 'M' in the booking area 100 is determined for a predetermined length of time, the position of the movement device 'D' is detected.

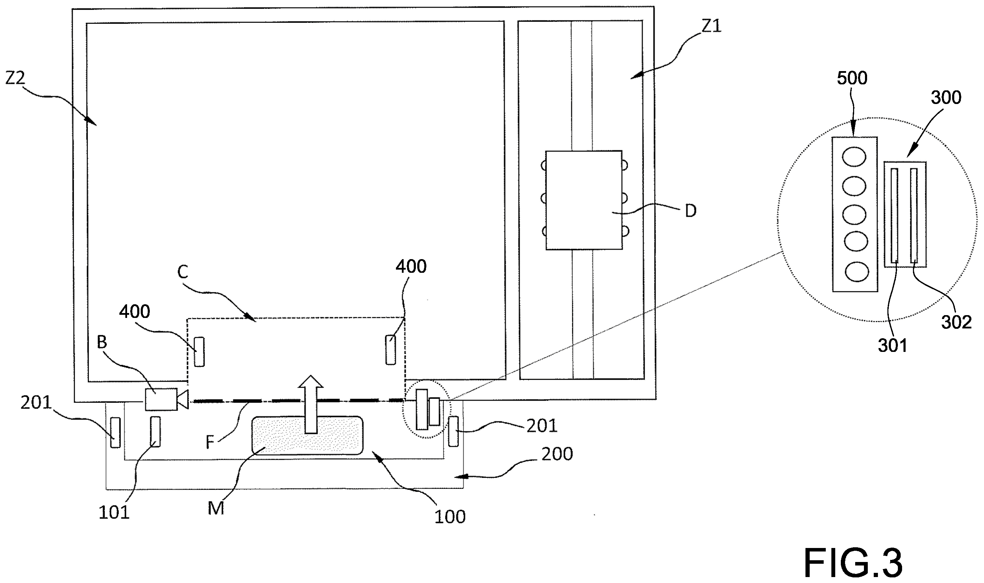

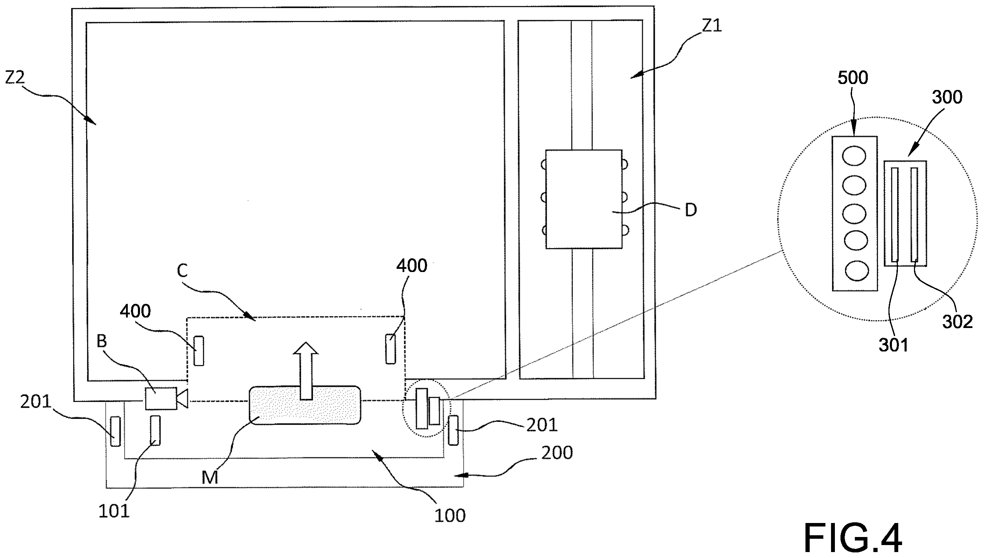

On the basis of the above-mentioned detection, the method comprises a step of determining at least one of the following conditions:
entry granted condition, in which the movement device "D" is in the first storage zone "Z1" and the goods "M" can advance to access the loading and unloading zone "C" (Figures 3 and 4);
entry denied condition, in which the movement device "D" is in the second storage zone "Z2" and the goods "M" are inhibited from gaining access to the loading and unloading zone "C" (Figure 2).

In other words, on the basis of the position of the movement device "D", an entry condition is derived in which the goods "M" can enter the unloading loading zone "C", or an entry denied condition is derived in which the goods "M" cannot enter the loading and unloading zone "C".

Preferably, if the entry denied condition is obtained, the method comprises a step of generating an alert signal.

Preferably, the alert signal indicates that the advancing of goods "M" towards the loading and unloading zone "C" is inhibited.

Preferably, the alert signal is a visual and/or acoustic signal.

Preferably, if the entry denied condition is obtained, the method further comprises a step of sending to the movement device "D" a command signal identifying a movement action towards the first storage zone "Z1" (Figure 2). With reference to the embodiment shown in Figures 2, the goods "M" are placed in the booking area 100 and the condition of presence is established. In this situation, the position of the movement device "D" is detected and, since it is located in the second storage zone "Z2", the entry denied condition is determined. In this way, the alert signal is generated and a movement command is sent to movement device "D" to move towards the first storage zone "Z1". Once the movement device "D" has reached the first storage zone "Z1", the entry granted condition is obtained and the goods "M" can be advanced towards the loading and unloading zone "C" (Figures 3 and 4).

At the moment the entry granted condition is obtained, the method comprises a step of generating an accessibility granted signal.

Preferably, the accessibility granted signal identifies a permission for the goods "M" to advance towards the loading and unloading zone "C".

Preferably, the accessibility signal is a visual and/or acoustic signal.

Preferably, if the entry granted condition is obtained, the method further comprises a step of keeping the movement device "D" in the first storage zone "Z1" (Figures 3 and 4).

In other words, while the goods "M" are allowed to advance towards the loading and unloading area "C", the movement device "D" is kept in the first storage zone "Z1", where it can, if necessary, continue to be moved.

Preferably, the method further comprises a step of detecting a break in a beam "F" emitted by a safety barrier "B" located in proximity to an entrance to the loading and unloading zone "C".

In this situation, if the entry denied condition is obtained and a breakage of the beam "F" is detected, the method comprises a step of stopping the movement of the movement device "D". In doing so, there is the certainty that, although the derived condition is entry denied, that is, the movement device "D" is located in the second storage zone "Z2", the goods "M" (products or operators) cannot be accidentally struck by the movement device "D" since it is stopped the moment the beam "F" is broken.

If, on the other hand, the entry granted condition is obtained, the method comprises a step of disabling the safety barrier "B" (Figure 4), that is, it stops the emission of the beam "F".

Preferably, after the entry granted condition is obtained, the method comprises a step of releasing or picking up the goods "M" in the loading and unloading zone "C" (Figure 4).

After the step of releasing or picking up, the method comprises a first step of checking whether there is a condition of absence of movement in the loading and unloading zone "C" for a predetermined length of time.

In other words, during the first checking step, it is determined whether, for a predetermined length of time, there is no movement in the loading and unloading zone "C".

In use, for example, once the operator, for example by using a means of transport, has released the goods "M" (materials or products) into the loading and unloading zone "C" and has driven the means of transport out from the loading and unloading zone "C", an absence of movement is detected therein for a predetermined length of time.

After the first checking step, the method comprises a second step of checking a condition of absence of movement in the booking area 100 for a predetermined length of time.

In other words, during the second checking step, it is determined whether, for a predetermined length of time, there is no movement in booking area 100.

With reference to the above example, once the operator has driven the means of transport through the booking area 100 outgoing therefrom, absence of movement is detected in the booking area 100 for a predetermined length of time.

If both of the conditions are true, the method comprises a step of generating a signal representative of the clearing of the loading and unloading zone "C" and of the booking area "100".

In this situation, the normal operation of the movement device "D" is restored and it is free to move between the first storage zone "Z1", the second storage zone "Z2" and the loading and unloading zone "C".

According to an aspect of the present invention, prior to the step of moving the goods "M" in the booking area 100, the method comprises a step of detecting the presence of the goods "M" in the booking area 100 and a step of reducing a speed of movement of the movement device "D" during a transit of the movement device "D" in the second storage zone "Z2".

In other words, when the presence of the goods "M" is detected in booking area 100, the speed of the movement device "D" in the second storage zone "Z2" is reduced.

Subsequently, after having determined the presence of the goods "M" in the booking area 100 for a predetermined length of time and after having detected the position of the movement device "D", the entry granted or denied condition is detected.

According to a possible embodiment, the step of reducing the speed of movement of the movement device "D" is carried out when the presence of the goods "M" is detected in a detection area 200 facing the booking area 100. In this situation, the booking area 100 is interposed between the detection area 200 and the loading and unloading zone 'C'. According to this embodiment, when the presence of the goods "M" is detected in the detection area 200, the speed of movement of the movement device "D" in the second storage zone "Z2" is reduced. Subsequently, the goods "M" are placed in the booking area 100, where the condition of presence for a predetermined length of time is determined. Subsequently, the position of the movement device "D" is detected and the entry granted or denied condition is determined.

As described above, once the goods "M" have been released or picked up in the loading and unloading zone "C", the method comprises the checking steps and the step of generating a signal representative of the clearing being completed. In this situation, according to a second aspect of the invention, after the step of generating a signal representative of the clearing being completed, the method comprises a step of restoring the speed of movement of the movement device "D". In this situation, the movement device "D" can resume the original operating speed even in the second storage zone "Z2".

The present invention also relates to a warehouse for goods "M" comprising a movement device "D" configured to pick up or release the goods "M" in a loading and unloading zone "C" of the warehouse and to move the goods "M" within the warehouse.

The warehouse further comprises a first storage zone "Z1" in which the movement device "D" is movable and a second storage zone "Z2" in which the movement device "D" is movable.

In the embodiment illustrated, the loading and unloading zone "C" defines a sector of the second storage zone "Z2" in which the inbound and outbound goods "M" to or from the warehouse are positioned.

The warehouse further comprises a booking area 100 facing the loading and unloading zone 'C' and external to the first and second storage zones 'Z1', 'Z2'.

The booking area 100 is configured to receive the goods "M" inbound or outbound to or from the loading and unloading zone "C".

The warehouse further comprises at least one presence sensor 101, positioned in the booking area 100 and configured to determine a condition of presence of the goods "M" in the booking area 100 for a predetermined length of time.

Preferably, the warehouse comprises two presence sensors 101.

Preferably, the at least one presence sensor 101 is a non-contact sensor. More preferably, the at least one presence sensor 101 is a radar.

The warehouse further comprises at least one position device operatively connected to the movement device "D" and configured to determine a position of the movement device "D".

The warehouse further comprises a control unit configured to determine, on the basis of the determinations of the presence sensor 101 and of the position device, at least one of the following conditions:
entry granted condition, in which the movement device "D" is in the first storage zone "Z1" and the goods "M" can access the loading and unloading zone "C";
entry denied condition, in which the movement device "D" is in the second storage zone "Z2" and the goods "M" are inhibited from gaining access to the loading and unloading zone "C".

According to one embodiment, the control unit is further configured, on the basis of the detection of the at least one presence sensor 101, to reduce a speed of movement of the movement device "D" during a transit of the movement device "D" in the second storage zone "Z2".

In other words, when the presence sensor 101 determines the condition of presence of the goods "M" in the loading and unloading zone "C", the control unit reduces the speed of the movement device "D" in the second storage zone "Z2".

According to a further embodiment, the warehouse comprises a detection area 200 facing the booking area 100.

The booking area 100 is interposed between the detection area 200 and the loading and unloading zone "C". In this situation, the warehouse comprises at least one presence detector 201, preferably a radar, configured to detect the presence of the goods "M" in the detection area 200. At least one presence detector 201 is connected to the control unit, which is configured, on the basis of the detection, to reduce the speed of movement of the movement device "D2" during a transit of the movement device "D" in the second storage zone "Z2".

In use, the goods "M" are positioned in the booking area 100 and the at least one presence sensor 101 determines the condition of presence of the goods "M" in the booking area 100 for a predetermined length of time. Meanwhile, the positioning device detects the position of the movement device "D". If the movement device "D" is located in the first storage zone "Z1", the entry granted condition is derived and the movement device "D" is kept in this zone while the goods "M" are advanced into the loading and unloading zone "C". If, on the other hand, the movement device "D" is located in the second storage zone "Z2", the entry denied condition is derived.

As shown for example in Figures 2 and 3, the warehouse could further comprise an indicator element 300 configured to indicate to an operator the entry granted or denied condition.

Preferably, the indicator element 300 is an optical element; more preferably the indicator element 300 comprises a first light 301 which switches on if the entry granted condition is determined and a second light 302 which switches on if the entry denied condition is determined.

Again with reference to the embodiment illustrated in the accompanying drawings, the warehouse could comprise a safety barrier "B" located in proximity to an entrance to the loading and unloading zone "C" and configured to detect an entry of the goods "M" into the loading and unloading zone "C".

Preferably, the safety barrier "B" is configured to emit a beam "F" as shown in the accompanying drawings.

The safety barrier "B" is operatively connected to the control unit and is configured to receive, from the control unit, a deactivation command if the entry granted condition is determined. In this situation, the emission of the beam "F" is broken.

The safety barrier "B" is further configured to send a danger signal to the control unit if it detects the entry of the goods "M" in the loading and unloading zone "C" when the entry denied condition is determined.

In particular, if the entry denied condition was determined and a break of the beam "F" was derived, the safety barrier "B" sends the danger signal to the control unit.

Preferably, once the danger signal is received, the control unit sends a stop signal to the movement device "D" identifying an immediate stop of the movement of the movement device "D".

Preferably, the warehouse further comprises, in the loading and unloading zone "C" and/or in the booking area 100, at least one movement sensor 400 configured to detect a movement and to send to the control unit, after a predetermined length of time, a signal of absence of movement in the loading and unloading zone "C" and/or in the booking area 100.

According to the preferred embodiment, the warehouse comprises at least one movement sensor 400 in the loading and unloading zone "C" and at least one movement sensor 400 in the booking area 100 each configured to detect a movement and to send to the control unit, after a predetermined length of time, a signal of absence of movement in the loading and unloading zone "C" and in the booking area 100, respectively.

The movement sensor 400 in the booking area 100 could coincide with the at least one presence sensor 101.

In use, if for example goods 'M' are to be introduced into the warehouse, for example an operator driving a means of transport positions the goods 'M' in the booking area 100 and the at least one presence sensor 101 determines the condition of presence in booking area 100 for a predetermined length of time. Meanwhile, the positioning device detects the position of the movement device "D". If the movement device "D" is located in the first storage zone "Z1", the entry granted condition is derived and the movement device "D" is kept in this zone while the goods "M" are advanced into the loading and unloading zone "C".

Once the goods "M" are positioned in the loading and unloading zone "C", the operator driving the means of transport leaves the loading and unloading zone "C" heading towards the booking area 100. In this situation, the at least one movement sensor 400 in the loading and unloading zone "C" sends, after a predetermined length of time, an absence of movement signal to the control unit.

The operator then also leaves from the booking area 100 and the at least one movement sensor 400 in the booking area 100 sends to the control unit, after a predetermined length of time, an absence of movement signal respectively in the booking area 100.

In this situation, the control unit receives a signal from the movement sensors 400 indicating that the clearing has been carried out, and sends to the movement device "D" a command to restore the speed of movement in the second storage zone "Z2".

Preferably, as shown in the accompanying figures, the warehouse further comprises a signalling element 500 connected to the control unit and positioned at an entry of the loading and unloading zone "C".

The signalling element 500 is configured to emit one or more of:
- an accessibility granted signal permitting access to the booking area 100 and/or to the loading and unloading zone "C";
- an accessibility denied signal inhibiting access to the booking area 100 and/or to the loading and unloading zone "C";
- a signal of presence of the goods "M" at least in the detection area 100. Preferably, the above-mentioned signals are visual and/or acoustic signals.

The present invention achieves the preset aims eliminating the drawbacks of the prior art.

In particular, the present invention makes it possible to obtain easy but at the same time safe access to a warehouse.

The present invention makes the use of the warehouse efficient in terms of time and safety.

## Claims

1. A method for managing access to a warehouse, said method comprising the following steps:
- moving goods (M) into a booking area (100) facing a loading and unloading zone (C) of said warehouse;
- identifying a condition of goods (M) present in the booking area (100) for a predetermined length of time;
- detecting the position of a movement device (D) which is movable in the warehouse and is configured to move said goods (M) between a first and second storage zone (Z1, Z2) of the warehouse, said loading and unloading zone (C) defining at least one sector of said second storage zone (Z2);
based on said detection, identifying at least one of the following conditions:
entry granted condition, where said movement device (D) is in the first storage zone (Z1) and the goods (M) are allowed to advance to access said loading and unloading zone (C);
entry denied condition, where said movement device (D) is in said second storage zone (Z2) and the goods (M) are inhibited from gaining access to the loading and unloading zone (C).

2. The method according to claim 1, wherein, if the entry denied condition is obtained, the method comprises the following steps:
- generating an alert signal, where said alert signal preferably represents an inhibition preventing the goods (M) from advancing towards the loading and unloading zone (C);
- sending to said movement device (D) a control signal representing an action of moving towards said first storage zone (Z1).

3. The method according to claim 1 or 2, wherein, if the entry granted condition is obtained, the method comprises the following steps:
- generating an accessibility granted signal, where said accessibility granted signal preferably represents a permission for the goods (M) to advance towards the loading and unloading zone (C);
- keeping said movement device (D) on hold in the first storage zone (Z1).

4. The method according to any one of the preceding claims. comprising a step of detecting a break in a beam (F) emitted by a safety barrier (B) located in proximity to an entrance to the loading and unloading zone (C), and wherein, if the entry denied condition is obtained and a break in said beam (F) is detected, the method comprises a step of stopping the movement of the movement device (D).

5. The method according to any one of the preceding claims. comprising a step of detecting a break in a beam (F) emitted by a safety barrier (B) located in proximity to an entrance to the loading and unloading zone (C), and wherein, if the entry granted condition is obtained, the method comprises a step of disabling said safety barrier (B).

6. The method according to any one of the preceding claims, wherein, following obtainment of the entry granted condition, the method comprises:
- a step of releasing or picking up the goods (M) in the loading and unloading zone (C);
and then:
- a first step of checking for a condition of absence of movement in the loading and unloading zone (C) for a predetermined length of time;
- a second step of checking for a condition of absence of movement in the booking area (100) for a predetermined length of time;
and wherein, if both conditions are true, the method comprises a step of generating a signal representative of the clearing of the loading and unloading zone (C) and of the booking area (100).

7. The method according to any one of the preceding claims, wherein, before the step of moving the goods (M) into said booking area (100), the method comprises the following steps:
- detecting the presence of said goods (M) in said booking area (100);
- reducing a speed of movement of the movement device (D) during a transit of the movement device (D) in the second storage zone (Z2).

8. The method according to claim 7, wherein the step of reducing a speed of movement of the movement device (D) is carried out when the presence of said goods (M) is detected in a detection area (200) facing the booking area (100), said booking area (100) being interposed between the detection area (200) and the loading and unloading zone (C).

9. The method according to claim 7 or 8, when dependent on claim 6, wherein the step of generating a signal representative of the clearing is followed by a step of returning the movement device (D) to its movement speed.

10. A warehouse for goods (M), comprising:
- a movement device (D), configured for picking up or releasing said goods (M) in a loading and unloading zone (C) of the warehouse and for moving said goods (M) inside the warehouse;
- a first storage zone (Z1) in which said movement device (D) is movable;
- a second storage zone (Z2) in which said movement device (D) is movable, said loading and unloading zone (C) defining at least one sector of said second storage zone (Z2) where warehouse inbound and outbound goods (M) are positioned;
- a booking area (100) facing the loading and unloading zone (C) and located outside said first and second storage zones (Z1, Z2), said booking area (100) being configured to receive the inbound or outbound goods (M) to or from the loading and unloading zone (C);
- at least one presence sensor (101), preferably a radar, located in the booking area (100) and configured to detect a condition of goods (M) present in the booking area (100) for a predetermined length of time;
- at least one position device, operatively connected to said movement device (D) and configured to identify a position of the movement device (D);
- a control unit which, based on what the presence sensor (101 and the position device have identified, is configured to identify at least one of the following conditions:
entry granted condition, where said movement device (D) is in the first storage zone (Z1) and the goods (M) are allowed to advance to access said loading and unloading zone (C);
entry denied condition, where said movement device (D) is in said second storage zone (Z2) and the goods (M) are inhibited from gaining access to the loading and unloading zone (C).

11. The warehouse according to claim 10, comprising an indicator element (300), configured to indicate to an operator the entry granted and denied conditions, preferably said indicator element (300) being an optical element, and more preferably, said indicator element (300) comprising a first light (301) which switches on if the entry granted condition is identified, and a second light (302) which switches on if the entry denied condition is identified.

12. The warehouse according to claim 10 or 11, comprising a safety barrier (B), located in proximity to the loading and unloading zone (C) and configured to detect an entry of the goods into the loading and unloading zone (C), said safety barrier (B) being operatively connected to the control unit and being configured for:
- receiving a disable command from the control unit if the access granted condition is identified;
- sending a danger signal to the control unit if it detects an entry of the goods into the loading and unloading zone (C) when the access denied condition is identified.

13. The warehouse according to any one of claims 10 to 12, wherein the control unit is configured, based on what said at least one presence sensor (101) has detected, to reduce a speed of movement of the movement device (D) during a transit of the movement device (D) in the second storage zone (Z2).

14. The warehouse according to any one of claims 10 to 12, comprising a detection area (200), facing the booking area (100), said booking area (100) being interposed between the detection area (200) and the loading and unloading zone (C), said warehouse comprising at least one presence detector (201), preferably a radar, configured to detect the presence of said goods (M) in said detection area (200) and connected to said control unit; - the control unit being configured, based on said detection, for reducing a speed of movement of the movement device (D) during a transit of the movement device (D) in the second storage zone (Z2).

15. The warehouse according to any one of claims 10 to 14, comprising, in said loading and unloading zone (C) and/or in said booking area (100), at least one movement sensor (400), configured to detect a movement and, after a predetermined length of time, sending to the control unit a signal indicating absence of movement in the loading and unloading zone (C) and/or in the booking area (100).
